# EUROPEAN PATENT SPECIFICATION

(11) **EP 2 878 419 B1**
(45) Date of publication and mention of the grant of the patent: **01.02.2017**
(21) Application number: 13194738.4
(22) Date of filing: 28.11.2013
(51) Int. Cl.: B29B 17/00, B29C 47/00, B29C 70/00

(54) **Method and system for recycling uncured composite offcuts**
Verfahren und System zum Recyceln unvernetzter Faserverbundstoffreststücke
Procédé et système de recyclage de chutes de composites non durcies

(43) Date of publication of application: 03.06.2015
(73) Proprietor: Airbus Operations GmbH, 21129 Hamburg (DE)
(72) Inventor: Herrmann, Axel, 21682 Stade (DE); Walla, Jens, 26133 Oldenburg (DE); Witte, Tassilo, 21680 Stade (DE)
(74) Representative: Isarpatent

(56) References cited:
- EP-A1- 2 610 165
- WO-A1-89/09123
- WO-A1-93/01034
- DE-A1- 3 744 728

## Description

The present invention relates to a method and a system for recycling scraps or offcuts of uncured composite material, especially pre-impregnated or "prepreg" fibre reinforcement having uncured polymer (resin) matrix material.

The use of composite materials in the design and manufacture of aircraft and spacecraft is becoming increasingly prevalent due to the low-weight and relatively high-strength properties achievable with those materials, among which fibre-reinforced polymer composites, such as carbon fibre reinforced polymers (CFRP), are especially preferred. As fibre-reinforced polymer composite materials now find increasing application in modern aircraft and spacecraft production, the amount of composite materials remaining as scrap after these production processes is also increasing. Much of that scrap is simply disposed of as waste, leading to a significant loss of a high-value and high-cost material. The method and system of the invention are therefore directed to redressing this loss and are especially suitable for use in the aircraft and aerospace industries. It will be appreciated, however, that the method and system of the invention are not limited to the aircraft and aerospace industries, but may be used in a wide range of applications where fibre-reinforced polymer composites are employed.

Currently, to salvage reinforcing fibres in scraps or offcuts of prepreg CFRP composite sheet, the polymer matrix material is removed, for example via pyrolysis. In addition to being energy and time intensive, however, this results in the loss of the intrinsic value in the polymer matrix material. Other recycling processes for composite scraps or offcuts involve grinding or milling the scrap into particulate. However, this not only involves a pre-processing or pre-treatment of the scrap material, but also results in a complete loss of the reinforcing fibre length.

Examples of general background art may be found in the patent documents WO 93/01034 A1, WO 89/09123 A1, EP 2 610 165 A1, and DE 37 44 728 A1.

It is therefore an object of the present invention to provide a new and improved method and system for overcoming one or more of the problems discussed above. In particular, it would be useful to provide a new and improved method of recycling scraps or offcuts of uncured composite material, such as pre-impregnated or prepreg fibre reinforcement scraps or offcuts. In this way, secondary parts or components may be produced to lower production costs, the buy-to-fly ratio of components in the material acquisition chain can be improved; and overall ecology of production in fibre-reinforced polymer composites, such as CFRP, can be enhanced.

In accordance with the invention, a method and a system of recycling scraps or offcuts of uncured composite material as recited in claim 1 and claim 9, respectively, is provided. In addition, a product, especially a component of an airframe or fuselage structure of an aircraft or spacecraft, manufactured with the method or system of the invention is also provided. Preferred features are recited in the dependent claims.

According to one aspect, therefore, the invention provides a method of recycling scraps or offcuts of uncured composite material, such as pre-impregnated or "prepreg" scraps or offcuts comprising reinforcing fibres and uncured polymer matrix material, the method comprising the steps of:
introducing the scraps or offcuts into a mixing device directly;
mixing the scraps or offcuts in the mixing device to blend the uncured polymer matrix material and the reinforcing fibres of the scraps or offcuts into a generally homogenous or uniform mixture; and
feeding or conveying the mixture from the mixing device, preferably into a shaping mechanism to form a component or a semi-finished product.

An advantage of the above method is that the scraps or offcuts of the uncured composite material can be introduced into the mixing device directly. That is, no pre-treatment of the scraps or offcuts is required. They may, of course, be stored temporarily before they are processed in the mixing device in order to ensure that a sufficient amount of those scraps or offcuts have been collected to sustain or support a recycling procedure according to this invention. In the mixing device the uncured polymer matrix material and reinforcing fibres from the scraps or offcuts are worked and blended together to a substantially consistent mass, which is then suitable for shaping to a new product. In this way, the previous waste of the scraps or offcuts can be readily recycled and used in other components, e.g. extruded profile elements like gusset fillers, which may not demand a high load-bearing capacity or role but can nevertheless be important elements in assembly of the overall structure.

In a preferred embodiment, the method is configured to form a continuous component or semi-finished product. In other words the step of feeding or conveying the mixture from the mixing device into a shaping mechanism to form a component or semi-product desirably proceeds on a continuous basis and the component produced is preferably elongate and/or continuous, e.g. having a generally constant cross-sectional shape or profile. An example of such a component is a gusset filler.

In a preferred embodiment, the shaping mechanism includes an extrusion die. The mixture generated by the mixing device should therefore be a sufficiently soft and flexible mass for it to be extruded through the die. As such, the feeding step preferably includes extrusion or "pultrusion" of the mixture through the extrusion die.

In a preferred embodiment, the shaping mechanism includes one or more forming rollers configured to engage and/or to press sides of the mixture fed or conveyed from the mixing device to form a desired or predetermined cross-section or profile of the component.

In a preferred embodiment, the shaping mechanism may include a moulding tool. The moulding tool preferably has a plurality of mould parts and is configured to clamp or press, and thus also hold, the mixture therein or there-between. As such, the feeding step may preferably include feeding or drawing the mixture into the moulding tool, whereby the moulding tool is configured to draw the mixture from the mixing device. Thus, the mould parts of the moulding tool are typically movable between an open position for receiving the mixture as it is fed or conveyed from the mixing device and a closed position for pressing or shaping the mixture. Further, the moulding tool is preferably movable to draw or pull the mixture from an outlet of the mixing device. In this way, the moulding tool may form at least part of the feed mechanism.

In a preferred embodiment, the mixing step includes kneading, stirring, blending, and/or otherwise working the scraps or offcuts of uncured composite material in the mixing device. In this regard, the mixing step may include some shearing or milling of the reinforcing fibres as the scraps or offcuts are worked to form the generally homogenous or consistent mixture, but the amount of shearing or cutting is desirably small in order to ensure that the reinforcing fibres retain some of their length. For example, the fibres of the scraps or offcuts may have a length in the range of about 100 mm to about 200 mm and, after mixing, the fibres of the mixture may have a length of about 10 mm to about 20 mm. To this end, the mixing device preferably includes at least one agitator member arranged in a mixing chamber for kneading, stirring, blending, and/or otherwise working the scraps or offcuts. In a preferred embodiment, the step of mixing the scraps or offcuts in the mixing device includes introducing or supplying additional polymer matrix material into the mixing device.

In a particularly preferred embodiment, the method further comprises the step of curing the component or semi-finished product formed by the shaping mechanism. The curing step will typically finish or harden the component into a product that has its final shape or form. In this regard, the curing step is preferably carried out in the moulding tool and preferably at a temperature in the range of about 60°C to about 200°C, more preferably in the range of about 80°C to 180°C, and even more preferably in the range of about 100°C to 160°C, e.g. at about 150°C.

To this end, the polymer matrix material is typically a polymer resin, such as a thermosetting resin, and may be selected from the group consisting of epoxy, polyester, vinyl ester, and nylon resins. As already noted above, the scraps or offcuts are preferably uncured prepreg of fibre reinforced polymer sheet material, such as carbon fibre reinforced polymer (CFRP), glass fibre reinforced polymer (GFRP), and/or aramid fibre reinforced polymer (AFRP). Alternatively, or in addition, the scraps or offcuts may comprise sheet moulding compound (SMC).

In a particularly preferred embodiment of the invention, the method comprises one or more of the preliminary steps of:
collecting the uncured scraps or offcuts;
sorting the uncured scraps or offcuts according to a type and/or grade of the reinforcing fibres or of the uncured polymer matrix material; and
storing the collected uncured scraps or offcuts in a cooled or refrigerated environment to minimise loss of the polymer matrix material.

In a particularly preferred embodiment, the method further comprises the step of applying a film layer to at least one side of the mixture fed from the mixing device. In this way, each film layer preferably forms a release film which assists removal of the component or product from the moulding tool.

According to a simplified aspect of the present invention, it will be noted that the method of recycling scraps or offcuts of uncured composite material may defer the step of feeding or conveying the mixture into a shaping mechanism. In other words, the method may just comprise the steps: introducing the scraps or offcuts directly into a mixing device; mixing the scraps or offcuts in the mixing device to blend the uncured polymer matrix material and the reinforcing fibres of the scraps or offcuts into a generally homogenous or uniform mixture; and feeding or conveying the mixture from the mixing device as a semi-finished product. In this way, the mixed semi-finished product may be stored for shaping or forming in a subsequent or later procedure.

According to another aspect, the present invention provides a system for recycling scraps or offcuts of uncured composite material, such as pre-impregnated or prepreg reinforcement fibres with uncured polymer matrix material, comprising:
a mixing device including: an inlet configured for introducing the scraps or offcuts into the mixing device, a mixing chamber configured for mixing the uncured polymer matrix material and reinforcement fibres of the scraps or offcuts to provide a generally homogenous or consistent mixture, and an outlet configured for discharging the mixture from the mixing device;
a feed mechanism or a conveying mechanism for feeding or conveying the mixture from the mixing device; and
a shaping mechanism for forming the mixture into a component or product, wherein the shaping mechanism includes at least one of an extrusion die, a forming roller, and a moulding tool.

In a preferred embodiment, the mixing device includes at least one agitator member arranged in the mixing chamber and having a shape or profile configured to promote mixing of the polymer matrix material and reinforcement fibres. Preferably, the agitator member is movable and configured to mix, stir, knead, blend, and/or otherwise work the scraps or offcuts as it moves. In this regard, the agitator member is preferably configured to rotate and includes one or more mixing elements thereon for working the scraps or offcuts. In a particularly preferred embodiment, the at least one agitator member may be configured to convey or advance the mixture through the mixing device such that the agitator member forms at least part of the feed mechanism.

In a preferred embodiment, the moulding tool may be movable between an open position for receiving the mixture as it is fed or conveyed from the mixing device and a closed position for shaping the mixture. In this regard, the moulding tool may have a plurality of mould parts configured to clamp or press the mixture between them in the closed position to form the component or product. Furthermore, the moulding tool is desirably movable to draw or pull the mixture from the outlet of the mixing device, such that the moulding tool may form at least part of the feed mechanism.

In a preferred embodiment, the system further comprises a film applicator device configured to apply a film layer from a film roll to at least one side of the mixture as it is fed or conveyed from the mixing device. As noted above, each film layer may therefore form a release film to assist removal of the component or product from the moulding tool.

According to a further aspect, the present invention provides a component that is produced or fabricated by a method and/or system of the present invention according to any one of the embodiments described above. In another aspect, the invention also provides a vehicle, such as an aircraft or spacecraft, with an airframe or fuselage structure including at least one component, and preferably several, produced or fabricated by a method and/or system of the invention according to any of the embodiments described above.

For a more complete understanding of the present invention and the advantages thereof, exemplary embodiments of the invention are explained in more detail in the following description with reference to the accompanying drawings, in which like reference characters designate like parts and in which:
- Fig. 1: is a schematic cross-sectional side view of a system for recycling scraps or offcuts of uncured composite material according to an embodiment of the invention, with detail of an extrusion die and a moulding tool;
- Fig. 2: is another cross-sectional side view of the system of Fig. 1 showing introduction and mixing of the scraps or offcuts;
- Fig. 3: is another cross-sectional side view of the system of Fig. 1 showing the mixture being extruded into the moulding tool;
- Fig. 4: is a further schematic cross-sectional side view of the system of Fig. 1 showing the mixture being clamped in a first moulding tool;
- Fig. 5: is yet another cross-sectional side view of the system of Fig. 1 showing the mixture drawn from the mixing device by a first moulding tool and relative movement of a second moulding tool;
- Fig. 6: is another cross-sectional side view of the system of Fig. 1 showing reversed positions of the first and second moulding tools;
- Fig. 7: is another cross-sectional side view of the system of Fig. 1 showing a release of the first moulding tool and clamping by the second moulding tool;
- Fig. 8: is another cross-sectional side view of the system of Fig. 1 showing the mixture drawn from the mixing device with the second moulding tool and relative movement of the first moulding tool;
- Fig. 9: is another cross-sectional side view of the system of Fig. 1 showing the first and the second moulding tools returning to their starting positions; and
- Fig. 10: is a schematic illustration of an aircraft having a fuselage or airframe structure which includes one or more component produced by a method or a system according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and/or well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

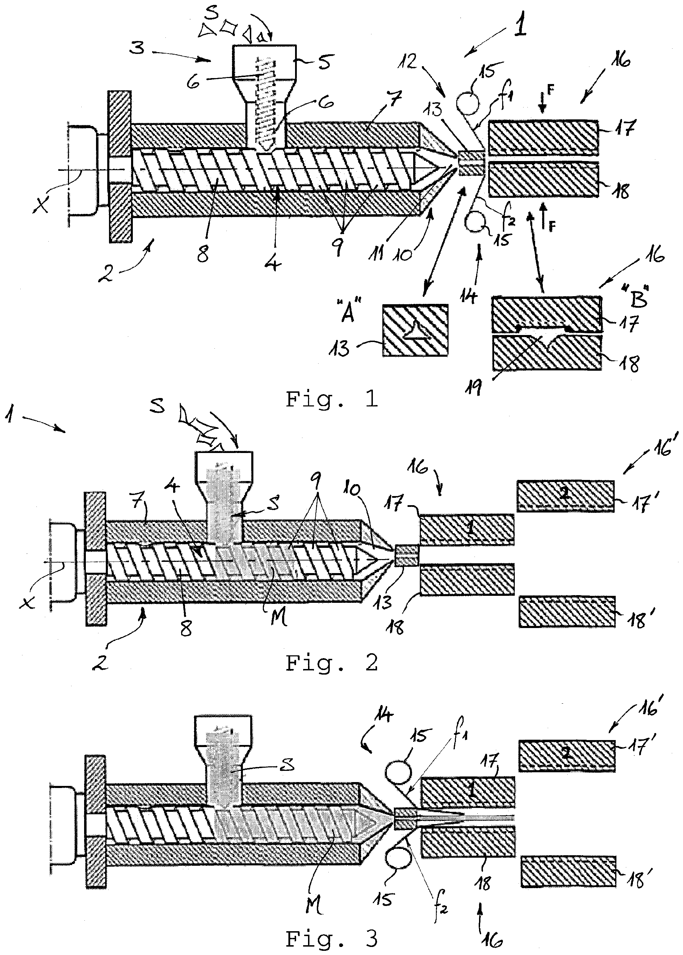

With reference firstly to Fig. 1 of the drawings, a system 1 for recycling scraps or offcuts S of uncured pre-impregnated (i.e. prepreg) CFRP sheets according to an embodiment of the invention is illustrated schematically in a cross-sectional side view. The system 1 includes a mixing device 2 having an inlet 3 which is configured for receiving and introducing the scraps or offcuts S into a mixing chamber 4 of the device 2. In particular, the inlet 3 includes a hopper or funnel-shaped channel 5 for receiving the scraps or offcuts S and a screw- or auger-type delivery member 6 for conveying the scraps or offcuts S from the inlet 3 into the mixing chamber 4. The mixing chamber 4 comprises a generally horizontally oriented cavity provided in a (e.g. cylindrical) housing 7 of mixing device 2. Extending centrally within the mixing chamber 4 and configured for rotation about its longitudinal axis X is an agitator member 8 having helical or screw-like elements 9 arranged along its length for engaging and working the scraps or offcuts S of the uncured composite material against the walls of the housing 7 of this mixing device 2. In this regard, the agitator member 8 is configured to stir, knead, blend and/or mix the uncured resin matrix material and the fibres from the prepreg scraps or offcuts S to a generally consistent or uniform mass or mixture M which may then be further processed.

By virtue of the helical or screw-like shape of the mixing elements 9 provided on the agitator member 8, the agitator member not only works the scraps or offcuts S but also acts to advance or convey the mixture M of resin matrix and fibres generated from the scraps or offcuts S in the longitudinal or axial direction along a length of the mixing cavity 4 towards an outlet 10 of the mixing device 2. In this embodiment, the outlet 10 tapers conically to an outlet opening 11 which then delivers the mixture M to a shaping mechanism 12. That is, the outlet opening 11 communicates directly with an extrusion die 13, a transverse cross-section of which is illustrated in Fig. 1 as detail "A". Because the agitator member 8 acts as a screw feed mechanism, the rotation of the agitator 8 forces the mass or mixture M of resin matrix and reinforcing fibres through the outlet 10 of the mixing device 2 into and through the extrusion die 13, which comprises a part of the shaping mechanism 12 for forming the mixture or mass M emerging from the mixing device 2.

Located downstream of the extrusion die 13, a film applicator device 14 is provided comprising rolls 15 of a polymer film or membrane f₁, f₂. This applicator device 14 is configured for applying a layer of the film f₁, f₂ to respective upper and lower sides of the mixture or mass M extruded through the die 13. As will be understood by persons skilled in the art, the film layers f₁, f₂ act as release films to prevent the composite mass or mixture M generated by the mixing device 2 from adhering to a moulding tool 16 later in the procedure.

Completing the description of the system 1 shown in Fig. 1 of the drawings, the moulding tool 16 can be seen in the path of the mixture M after it emerges from the extrusion die 13. In particular, the moulding tool 16 comprises upper and lower mould parts 17, 18 which are movable between an open position for receiving the mixture M fed or conveyed from the mixing device 2 and a closed position, in which the mixture M is clamped and/or pressed between the mould parts 17, 18 to form a desired shape defined by a cavity 19 in the mould 16. In this example, the upper and lower mould parts 17, 18 are also shown in longitudinal cross-section in detail "B" of Fig. 1.

With consecutive reference now to drawing Figs. 2 to 9, the manner in which the system 1 of the above embodiment operates and, therefore, the method according to an embodiment of this invention, will be explained in more detail.

As a preliminary step in the method of this invention, it will be noted that uncured fibre-reinforced polymer (FRP) prepreg scraps or offcuts S may be collected from various production processes or stations and sorted according to, for example, the type of reinforcing fibres (e.g. carbon fibres or aramid fibres) and/or the grade or quality of those fibres (e.g. fibre diameter and/or fibre orientation), as well as according to the particular resin matrix material involved. Of course, where predominantly only a single type of prepreg composite material is in use in the production processes, the sorting procedure may be limited to the size of the scraps or offcuts S. The method may also include the preliminary step of temporarily storing the collected scraps or offcuts S before the recycling procedure in the mixing device 2 begins. In this regard, the uncured prepreg scraps or offcuts S are desirably stored in a cooled or refrigerated environment to ensure that the resin matrix material remains firmly intact and retained to the fibre reinforcement.

As seen in Fig. 2, the scraps or offcuts S to be recycled are fed directly into the funnel-shaped hopper or channel 5 at an upper end of the inlet 3 to the mixing device 2. Introduction of the scraps or offcuts S into the mixing device 2 in this way typically takes place at room temperature (e.g. 20°C), so that the uncured resin matrix may be workable as a relatively soft and flexible mass. Thus, referring to Fig. 2, the scraps or offcuts S are delivered into the mixing chamber 4 via the augur or screw delivery mechanism 6 in the inlet 3 and the reinforcing fibres and the mass of resin matrix material are kneaded, blended and mixed via helical or screw elements 9 of the agitator member 8 rotating about its longitudinal axis X.

One distinction between the illustration of the system 1 in this embodiment of drawing Fig. 2 and the system 1 described with reference to Fig. 1 is that Fig. 2 shows two moulding tools 16, 16', respectively labelled "1" and "2". In other words, the system 1 in fact includes a first moulding tool 16 with upper and lower mould parts 17, 18 and a second moulding tool 16' having upper and lower mould parts 17', 18'. In this regard, however, the configuration of the mould cavity 19, 19 in each of the first and second moulding tools 16, 16' is substantially identical.

Referring now to Fig. 3, the mixed mass M of resin matrix and fibres is fed via the screw agitator 8 through the outlet 10 of the mixing device 2 and through the extrusion die 13 between the upper and lower mould parts 17, 18 of the first moulding tool 16. At this stage, also, the upper film f₁ and the lower film f₂ are fed from the respective rolls 15 of the film applicator device 14 to cover the upper and lower sides or surfaces of the mixture M between the mould parts 17, 18 of the first moulding tool 16.

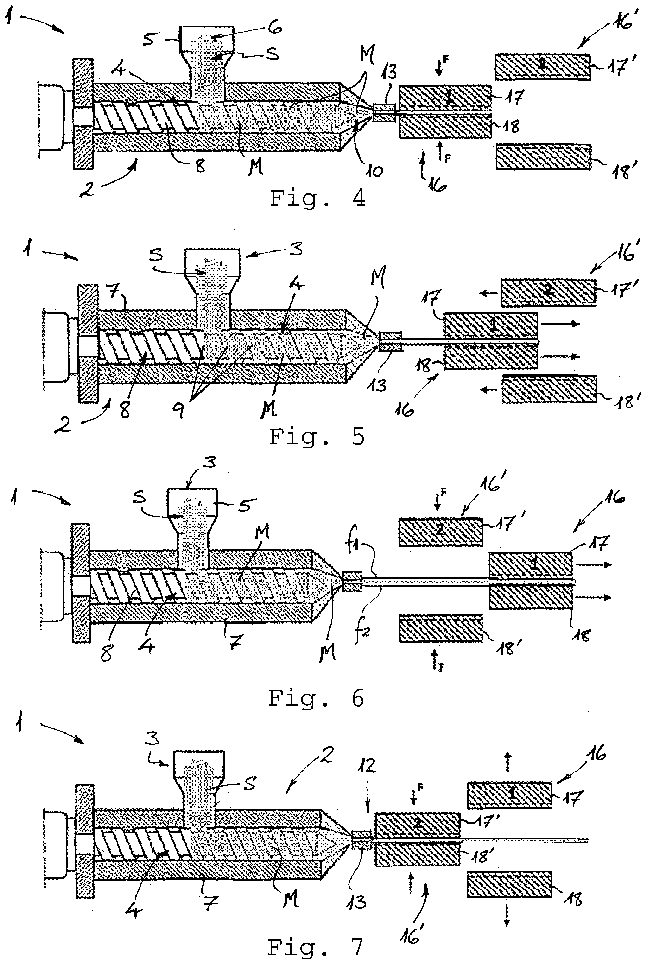

Drawing Fig. 4 illustrates that the first moulding tool 16 is moved to a closed position by applying a force F to the upper and lower mould parts 17, 18 such that the extruded mixture M fed or conveyed from the outlet 10 of the mixing device 2 is clamped and pressed between the mould parts 17, 18 in the mould cavity 19.

As can be seen in Fig. 5, the first moulding tool 16 is then movable in the axial direction away from the mixing device 2 such that the first moulding tool 16 acts to assist in the feeding or conveying of the mixture M from the mixing device 2. In particular, the movement of the first moulding tool 16 in the axial direction draws or pulls the mass or mixture M from the extrusion die 13, which supports the feeding of that mixture M through the extrusion die 13 by the rotation of the screw-like agitator member 8. Accordingly, in this embodiment the mixture M undergoes a "pultrusion" procedure. As can also be seen in Fig. 5, as the first moulding tool 16 is moved in the axial direction away from the mixing device 2, the second moulding tool 16' is moved with its upper and lower mould parts 17', 18' opened and separated from one another towards the mixing device 2.

Referring now to Fig. 6 of the drawings, the first moulding tool 16 reaches a maximum position or displacement away from the mixing device 2 and the second moulding tool 16' reaches its maximum position towards the mixing device 2. As the first moulding tool 16 moves with a section of the mixture M clamped within its mould cavity 19, the moulding tool 16 may apply heat (and pressure) to the composite mixture M pressed between the mould parts 17, 18 to at least partially cure the polymer resin in the mixture M.

In Fig. 7 then, the upper and lower mould parts 17', 18' of the second moulding tool 16' are moved together to clamp and press the extruded mixture M of resin matrix and reinforcing fibres between them, while upper and lower mould parts 17, 18 of the first moulding tool 16 are moved apart to an open position to release a completed section of the elongate and continuous component (e.g. gusset filler) therein.

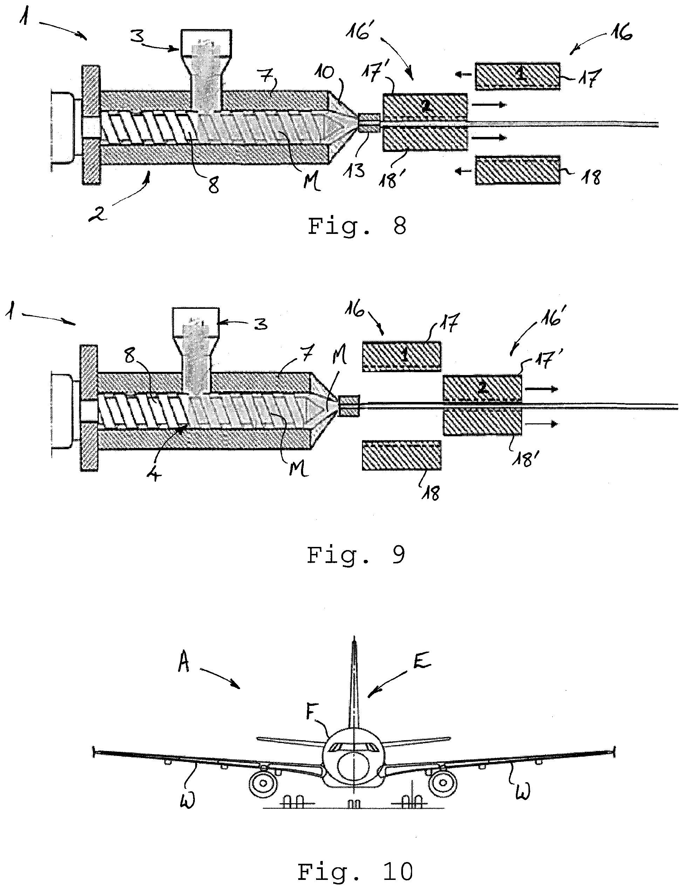

Referring now to Fig. 8, the upper and lower mould parts 17, 18 of first moulding tool 16 then move in the axial direction back towards the mixing device 2 while the closed and clamped second moulding tool 16' moves in the axial direction away from the mixing device 2 to draw and further support the feed or conveyance of the mass or mixture M of resin matrix and reinforcing fibres through extrusion die 13 on a continuous basis. Like the first moulding tool 16, the second moulding tool 16' applies heat and pressure to the composite material pressed between the mould parts 17', 18' to perform curing as the second moulding tool is moved in the axial direction away from the mixing device 2.

After the position of the first and second moulding tools 16, 16' in Fig. 9 is reached, respective upper and lower mould parts 17, 18, 17', 18' of the first and second moulding tools 16, 16' effectively return to their positions shown in Fig. 3 and the sequence of the method steps or operating procedure between Fig. 3 and Fig. 9 are repeated.

In this way, continuous production of a continuous component, namely a gusset filler, can be performed with the recycled composite material from the prepreg scraps or offcuts S with this system 1.

Finally, with reference to Fig. 10, a schematic illustration of an aircraft A is shown having an airframe which includes a fuselage F, wings W, and an empennage E. The airframe of the aircraft A incorporates one or more panel component formed by a system 1 and/or a method according to an embodiment of the invention, for example, as described above with reference to Fig. 1 to Fig. 9.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: system
- 2: mixing device
- 3: inlet
- 4: mixing chamber
- 5: hopper or funnel-shaped channel
- 6: delivery member
- 7: housing
- 8: agitator member
- 9: agitator element
- 10: outlet
- 11: outlet opening
- 12: shaping mechanism
- 13: extrusion die
- 14: film applicator device
- 15: roll of film
- 16: moulding tool
- 17: upper mould part
- 18: lower mould part
- 19: mould cavity
- S: scraps or offcuts
- M: mass or mixture
- X: longitudinal axis
- f₁: upper film layer
- f₂: lower film layer
- A: aircraft
- F: fuselage or airframe
- W: wings
- E: empennage

## Claims

1. A method of recycling scraps or offcuts (S) of uncured composite material, such as pre-impregnated or "prepreg" scraps or offcuts having reinforcing fibres and uncured polymer matrix material, comprising the steps of:
introducing the scraps or offcuts (S) into a mixing device (2) directly;
mixing the scraps or offcuts (S) in the mixing device (2) to blend uncured polymer matrix material and reinforcing fibres of the scraps or offcuts (S) into a generally homogenous or consistent mixture (M);
feeding or conveying the said mixture (M) from the mixing device (2), into a shaping mechanism (12) to form a component or semi-finished product; and
applying a film layer (f1, f2) to at least one side of the mixture (M) fed from the mixing device (2).

2. A method according to claim 1, wherein the shaping mechanism (12) comprises: an extrusion die (13) and the feeding step includes extruding or "pultruding" the mixture (M) through the extrusion die (13), and/or one or more forming rollers which engage or press sides of the mixture to form a cross-section or profile of the component or semi-finished product.

3. A method according to claim 1 or claim 2, wherein the shaping mechanism (12) includes a moulding tool (16) and wherein the feeding step includes feeding or drawing the mixture (M) into the moulding tool (16), wherein the moulding tool (16) is preferably configured to clamp or to press and hold the mixture (M) therein and to draw the mixture (M) from the mixing device (2).

4. A method according to any of claims 1 to 3, wherein the step of mixing the scraps or offcuts (S) in the mixing device (2) includes at least some partial shearing or milling of the reinforcing fibres to form the generally homogenous or consistent mixture (M).

5. A method according to any of claims 1 to 4, wherein the step of mixing the scraps or offcuts (S) in the mixing device (2) includes supplying additional polymer matrix material into the mixing device (2).

6. A method according to any of claims 1 to 5, comprising one or more of the preliminary steps of:
collecting the uncured scraps or offcuts (S);
sorting the uncured scraps or offcuts (S) according to a type and/or grade of the reinforcing fibres or the uncured polymer matrix material;
storing the collected uncured scraps or offcuts (S) in a cooled or refrigerated environment to minimise loss of the polymer matrix material.

7. A method according to any one of claims 1 to 6, further comprising the step of curing the component or semi-finished product formed by the shaping mechanism (12), wherein the curing occurs in the moulding tool (16) and preferably at a temperature in the range of about 60°C to 200°C, preferably in the range of 80°C to 180°C, and more preferably in the range of about 100°C to 160°C.

8. A method according to any one of claims 1 to 7, wherein each film layer (f1, f2) forms a release film to assist removal of semi-finished products from the moulding tool (16).

9. A system (1) for recycling scraps or offcuts (S) of an uncured composite material, such as reinforcement fibres pre-impregnated with uncured polymer matrix material, comprising:
a mixing device (2) having: an inlet (3) configured for introducing the scraps or offcuts (S) into the mixing device (2), a mixing chamber (4) configured for mixing reinforcement fibres and uncured polymer matrix material of the scraps or offcuts (S) to produce a generally homogenous or consistent mixture (M), and an outlet (9) configured for discharging the mixture (M) from the mixing device (2);
a feed mechanism for conveying the mixture or mass (M) from the mixing device (2); and
a shaping mechanism (12) for forming the mixture (M) into a component or product, wherein the shaping mechanism (12) includes one or more of an extrusion die (13), a forming roller, and a moulding tool (16) **characterized in that** the system comprises a film applicator device (14) configured to apply a film layer (f1, f2) from a film roll (15) to at least one side of the mixture (M) fed or conveyed from the mixing device (2).

10. A system according to claim 9, wherein the mixing device (2) includes at least one movable mixing member (8) arranged in the mixing chamber (4) and having a profile configured to promote mixing of the reinforcement fibres and polymer matrix material as it moves, wherein the mixing member (8) is preferably configured to rotate and includes one or more mixing elements (9) thereon.

11. A system according to claim 9 or claim 10, wherein the at least one mixing member (8) is configured to convey or advance the mixture (M) through the mixing device (2) such that the mixing member (8) forms at least part of the feed mechanism.

12. A system according to any of claims 9 to 11, wherein the moulding tool (16) is movable between an open position for receiving the mixture (M) and a closed position for shaping the mixture (M), wherein the moulding tool (16) is movable to draw or pull the mixture (M) from the outlet (10) of the mixing device (2), whereby the moulding tool forms at least part of the feed mechanism.

13. A system according to any of claims 9 to 12, wherein the moulding tool (16) comprises a plurality of mould parts (17, 18) that clamp or press the mixture (M) between them to form the component or (semi-finished) product.

## Patentansprüche

1. Verfahren zum Recyceln von Abfällen oder Resten (S) von unausgehärtetem Verbundmaterial, wie zum Beispiel präimpregnierten oder "Prepreg"-Abfällen oder -Resten, die Verstärkungsfasern und unausgehärtetes Polymermatrixmaterial enthalten, wobei das Verfahren folgende Schritte umfasst:
direktes Einbringen der Abfälle oder Reste (S) in eine Mischvorrichtung (2);
Vermischen der Abfälle oder Reste (S) in der Mischvorrichtung (2), um unausgehärtetes Polymermatrixmaterial und Verstärkungsfasern der Abfälle oder Reste (S) zu einem allgemein homogenen oder gleichförmigen Gemisch (M) zu vermengen;
Zuführen oder Transportieren des Gemisches (M) aus der Mischvorrichtung (2) in einen Formgebungsmechanismus (12), um eine Komponente oder ein Halbfertigprodukt zu bilden; und
Aufbringen einer Filmschicht (f1, f2) auf mindestens eine Seite des aus der Mischvorrichtung (2) zugeführten Gemisches (M).

2. Verfahren nach Anspruch 1, wobei der Formgebungsmechanismus (12) eine Extrusionsdüse (13) umfasst und der Zuführschritt das Extrudieren oder "Pultrudieren" des Gemisches (M) durch die Extrusionsdüse (13) umfasst und/oder eine oder mehrere Formrollen umfasst, die Seiten des Gemisches in Eingriff nehmen oder pressen, um einen Querschnitt oder ein Profil der Komponente oder des Halbfertigprodukts zu bilden.

3. Verfahren nach Anspruch 1 oder Anspruch 2, wobei der Formgebungsmechanismus (12) ein Formwerkzeug (16) umfasst und wobei der Zuführschritt das Zuführen oder Ziehen des Gemisches (M) in das Formwerkzeug (16) umfasst, wobei das Formwerkzeug (16) bevorzugt dafür ausgebildet sind, das Gemisch (M) darin festzuklemmen oder zu drücken und zu halten und das Gemisch (M) aus der Mischvorrichtung (2) zu ziehen.

4. Verfahren nach einem der Ansprüche 1 bis 3, wobei der Schritt des Mischens der Abfälle oder Reste (S) in der Mischvorrichtung (2) mindestens ein teilweises Scheren oder Mahlen der Verstärkungsfasern umfasst, um das allgemein homogene oder gleichförmige Gemisch (M) zu bilden.

5. Verfahren nach einem der Ansprüche 1 bis 4, wobei der Schritt des Mischens der Abfälle oder Reste (S) in der Mischvorrichtung (2) umfasst, weiteres Polymermatrixmaterial in die Mischvorrichtung (2) einzuleiten.

6. Verfahren nach einem der Ansprüche 1 bis 5, das einen oder mehrere der folgenden vorläufigen Schritte umfasst:
Einsammeln der unausgehärteten Abfälle oder Reste (S);
Sortieren der unausgehärteten Abfälle oder Reste (S) gemäß einem Typ und/oder einer Sorte der Verstärkungsfasern oder des unausgehärteten Polymermatrixmaterials;
Bevorraten der eingesammelten unausgehärteten Abfälle oder Reste (S) in einer gekühlten oder Kälteumgebung, um Verluste des Polymermatrixmaterials zu minimieren.

7. Verfahren nach einem der Ansprüche 1 bis 6, das des Weiteren den Schritt des Aushärtens der Komponente oder des Halbfertigprodukts, die bzw. das durch den Formgebungsmechanismus (12) gebildet wurde, umfasst, wobei das Aushärten in dem Formwerkzeug (16) und bevorzugt bei einer Temperatur im Bereich von etwa 60 °C bis 200 °C, bevorzugt im Bereich von 80°C bis 180 °C und besonders bevorzugt im Bereich von etwa 100°C bis 160 °C stattfindet.

8. Verfahren nach einem der Ansprüche 1 bis 7, wobei jede Filmschicht (f1, f2) einen Trennfilm bildet, um das Herausnehmen von Halbfertigprodukten aus dem Formwerkzeug (16) zu erleichtern.

9. System (1) zum Recyceln von Abfällen oder Resten (S) eines unausgehärteten Verbundmaterials, wie zum Beispiel Verstärkungsfasern, die mit unausgehärtetem Polymermatrixmaterial prä-impregniert sind, und das Folgendes umfasst:
eine Mischvorrichtung (2), die Folgendes aufweist: einen Einlass (3), der dafür ausgebildet ist, die Abfälle oder Reste (S) in die Mischvorrichtung (2) einzubringen, eine Mischkammer (4), die dafür ausgebildet ist, Verstärkungsfasern und unausgehärtetes Polymermatrixmaterial der Abfälle oder Reste (S) zu vermischen, um ein allgemein homogenes oder gleichförmiges Gemisch (M) zu erzeugen, und einen Auslass (9), der dafür ausgebildet ist, das Gemisch (M) aus der Mischvorrichtung (2) abzulassen;
einen Zuführmechanismus zum Transportieren des Gemisches oder der Masse (M) aus der Mischvorrichtung (2); und
einen Formgebungsmechanismus (12), um das Gemisch (M) in die Form einer Komponente oder eines Produkts zu bringen, wobei der Formgebungsmechanismus (12) eines oder mehrere von einer Extrusionsdüse (13), einer Formrolle und eines Formwerkzeugs (16) umfasst, **dadurch gekennzeichnet, dass** das System eine Filmauftragsvorrichtung (14) umfasst, die dafür ausgebildet ist, eine Filmschicht (f1, f2) von einer Filmrolle (15) auf mindestens eine Seite des Gemisches (M) aufzutragen, das aus der Mischvorrichtung (2) zugeführt oder transportiert wurde.

10. System nach Anspruch 9, wobei die Mischvorrichtung (2) mindestens ein bewegliches Mischglied (8) umfasst, das in der Mischkammer (4) angeordnet ist und ein Profil aufweist, das dafür ausgebildet sind, das Vermischen der Verstärkungsfasern und des Polymermatrixmaterials zu optimieren, während es sich bewegt, wobei das Mischglied (8) bevorzugt dafür ausgebildet ist, sich zu drehen, und ein oder mehrere Mischelemente (9) auf dem Mischglied (8) angeordnet sind.

11. System nach Anspruch 9 oder Anspruch 10, wobei das mindestens eine Mischglied (8) dafür ausgebildet ist, das Gemisch (M) so durch die Mischvorrichtung (2) zu transportieren oder voranzuschieben, dass das Mischglied (8) mindestens einen Teil des Zuführmechanismus bildet.

12. System nach einem der Ansprüche 9 bis 11, wobei das Formwerkzeug (16) zwischen einer offenen Position zum Aufnehmen des Gemisches (M) und einer geschlossenen Position zum Formen des Gemisches (M) bewegt werden kann, wobei das Formwerkzeug (16) bewegt werden kann, um das Gemisch (M) aus den Auslass (10) der Mischvorrichtung (2) zu ziehen, wobei das Formwerkzeug mindestens einen Teil des Zuführmechanismus bildet.

13. System nach einem der Ansprüche 9 zu 12, wobei das Formwerkzeug (16) mehrere Formwerkzeugteile (17, 18) umfasst, die das Gemisch (M) zwischen sich festklemmen oder drücken, um die Komponente oder das Halbfertigprodukt zu bilden.

## Revendications

1. Procédé de recyclage de déchets ou de chutes (S) de matériau composite non durci, tels que des déchets ou chutes préimprégné(e)s (prepeg) comportant des fibres de renforcement et une matière formant matrice polymère, comprenant les étapes consistant à :
introduire directement les déchets ou chutes (S) dans un dispositif mélangeur (2) ;
mélanger les déchets ou chutes (S) dans le dispositif mélangeur (2) pour brasser la matière formant matrice polymère non durcie et les fibres de renforcement des déchets ou chutes (S) afin d'obtenir un mélange sensiblement homogène ou uniforme (M) ;
acheminer ou transporter ledit mélange (M) du dispositif mélangeur (2) dans un mécanisme de façonnage (12) pour former un élément ou un produit semi-fini ; et
appliquer une couche pelliculaire (f1, f2) sur au moins un côté du mélange (M) acheminé depuis le dispositif mélangeur (2).

2. Procédé selon la revendication 1, dans lequel le mécanisme de façonnage (12) comprend : une filière d'extrusion (13) et l'étape d'acheminement inclut l'extrusion ou la « pultrusion » du mélange (M) à travers la filière d'extrusion (13), et/ou un ou plusieurs galet(s) formeur(s) qui s'applique(nt) sur des côtés du mélange ou les compriment pour former une section ou un profilé de l'élément ou du produit semi-fini.

3. Procédé selon la revendication 1 ou la revendication 2, dans lequel le mécanisme de façonnage (12) comporte un outil de moulage (16) et dans lequel l'étape d'acheminement inclut l'acheminement ou l'étirage du mélange (M) dans l'outil de moulage (16), dans lequel l'outil de moulage (16) est conçu de préférence pour serrer ou comprimer et contenir le mélange (M) et pour étirer le mélange (M) à partir du dispositif mélangeur (2).

4. Procédé selon l'une quelconque des revendications 1 à 3, dans lequel l'étape de mélange des déchets ou chutes (S) dans le dispositif mélangeur (2) inclut au moins un cisaillage ou un broyage partiel des fibres de renforcement pour former le mélange sensiblement homogène ou uniforme (M).

5. Procédé selon l'une quelconque des revendications 1 à 4, dans lequel l'étape de mélange des déchets ou chutes (S) dans le dispositif mélangeur (2) inclut l'alimentation du dispositif mélangeur (2) en matière formant matrice polymère supplémentaire.

6. Procédé selon l'une quelconque des revendications 1 à 5, comprenant une ou plusieurs des étapes préliminaires consistant à :
collecter les déchets ou chutes non durci(e)s (S) ;
trier les déchets ou chutes non durcie(s) (S) en fonction d'un type et/ou d'une qualité des fibres de renforcement ou de la matière formant matrice polymère non durcie ;
stocker les déchets ou chutes non durcie(s) collecté(e)s (S) dans un environnement refroidi ou réfrigéré pour minimiser la perte de matière formant matrice polymère.

7. Procédé selon l'une quelconque des revendications 1 à 6, comprenant en outre l'étape de durcissement de l'élément ou du produit semi-fini formé par le mécanisme de façonnage (12), dans lequel le durcissement se produit dans l'outil de moulage (16) et de préférence à une température comprise dans la plage d'environ 60 °C à 200 °C, de préférence dans la plage de 80 °C à 180 °C, et de préférence encore dans la plage d'environ 100 °C à 160 °C.

8. Procédé selon l'une quelconque des revendications 1 à 7, dans lequel chaque couche pelliculaire (f1, f2) forme un film de démoulage pour faciliter l'extraction de produits semi-finis hors de l'outil de moulage (16).

9. Système (1) destiné à recycler des déchets ou chutes (S) d'un matériau composite non durci, tel que des fibres de renforcement préimprégnées d'une matière formant matrice polymère non durcie, comprenant :
un dispositif mélangeur (2) comportant : une entrée (3) conçue pour introduire les déchets ou chutes (S) dans le dispositif mélangeur (2), une chambre de mélange (4) conçue pour mélanger les fibres de renforcement et la matière formant matrice polymère non durcie des déchets ou chutes (S) afin de produire un mélange sensiblement homogène ou uniforme (M), et une sortie (9) conçue pour évacuer le mélange (M) hors du dispositif mélangeur (2) ;
un mécanisme d'acheminement destiné à transporter le mélange ou la masse (M) depuis le dispositif mélangeur (2) ; et
un mécanisme de façonnage (12) destiné à façonner le mélange (M) en un élément ou produit, le mécanisme de façonnage (12) comportant un(e) ou plusieurs parmi : une filière d'extrusion (13), un galet formeur et un outil de moulage (16),
**caractérisé en ce que** le système comprend un dispositif applicateur de film (14) conçu pour appliquer une couche pelliculaire (f1, f2) à partir d'un rouleau de film (15) sur au moins un côté du mélange (M) acheminé ou transporté depuis le dispositif mélangeur (2).

10. Système selon la revendication 9, dans lequel le dispositif mélangeur (2) comporte au moins un organe mélangeur mobile (8) disposé dans la chambre de mélange (4) et présentant un profil conçu pour favoriser le mélange des fibres de renforcement et de la matière formant matrice polymère à mesure qu'il se déplace, dans lequel l'organe mélangeur (8) est conçu de préférence pour tourner et comporte un ou plusieurs élément(s) mélangeur(s) (9) sur celui-ci.

11. Système selon la revendication 9 ou la revendication 10, dans lequel ledit au moins un organe mélangeur (8) est conçu pour transporter ou faire avancer le mélange (M) à travers le dispositif mélangeur (2), de sorte que l'organe mélangeur (8) constitue au moins une partie du mécanisme d'acheminement.

12. Système selon l'une quelconque des revendications 9 à 11, dans lequel l'outil de moulage (16) est mobile entre une position ouverte pour recevoir le mélange (M) et une position fermée pour façonner le mélange (M), dans lequel l'outil de moulage (16) est mobile pour étirer ou tirer le mélange (M) depuis la sortie (10) du dispositif mélangeur (2), moyennant quoi l'outil de moulage constitue au moins une partie du mécanisme d'acheminement.

13. Système selon l'une quelconque des revendications 9 à 12, dans lequel l'outil de moulage (16) comprend une pluralité de parties de moulage (17, 18) qui serrent ou compriment le mélange (M) entre eux pour former l'élément ou le produit (semi-fini).
